# FASCICULE DE BREVET EUROPEEN

(11) **EP 2 212 011 B1**
(45) Date de publication et mention de la délivrance du brevet: **24.04.2013**
(21) Numéro de dépôt: 08871723.6
(22) Date de dépôt: 29.10.2008
(51) Int. Cl.: B01D 53/86, B01J 23/882, B01J 21/06, C01B 17/16

(54) **TRAITEMENTS DE GAZ DE QUEUE D'UNE UNITE CLAUS SUR UN ENCHAINEMENT OPTIMISE DE CATALYSEURS**
VERARBEITUNG VON ENDGASEN EINER GESCHLOSSENEN EINHEIT IN EINER OPTIMIERTEN LEITUNG AUS KATALYSATOREN
PROCESSING OF TAIL GASES OF A CLOSED UNIT ON AN OPTIMISED LINE OF CATALYSTS

(30) Priorité: 31.10.2007 FR 0707705
(43) Date de publication de la demande: 04.08.2010
(73) Titulaire: IFP Energies nouvelles, 92852 Rueil-Malmaison Cedex (FR)
(72) Inventeur: NEDEZ, Christophe, F-30340 Salindres (FR); ROISIN, Eric, F-92500 Rueil-Malmaison (FR)
(86) Numéro de dépôt international: PCT/FR2008/001524
(87) Numéro de publication internationale: WO 2009/095548

(56) Documents cités:
- EP-A- 0 669 854
- EP-A- 1 442 781
- WO-A-98/07502
- WO-A-2005/113429
- FR-A- 2 481 254

## Description

Plusieurs procédés de transformation de l'H₂S en soufre existent dont le plus classique s'appelle le procédé Claus modifié.

Après séparation aux amines, le gaz nommé "acide" qui comprend de l'H₂S est envoyé dans un four fonctionnant usuellement vers 1100°C.

Un appoint d'air permet de partiellement oxyder l'H₂S présent en SO₂, de telle manière à obtenir, en sortir de cette étape thermique, un rapport molaire H₂S sur SO₂ de 2.

Dès cette étape, environ 70% des composés soufrés sont transformés en soufre élémentaire, qui est récupéré par condensation.

Au sortir de cette étape, les gaz sont envoyés, après réchauffage, vers des réacteurs catalytiques (souvent deux ou trois), placés en série, qui ont pour objectif d'assurer la réaction de Claus (1) mais également les réactions d'hydrolyse du COS (2) et CS₂ (3), impuretés préalablement formées.

2 H₂S + SO₂ → 2 H₂O + 3/x Sₓ (1)

COS + H₂O → CO₂ + H₂S (2)

CS₂ + 2 H₂O → CO₂ + 2 H₂S (3)

Toute insuffisance de conversion conduit à une diminution du taux de récupération du soufre donc à une hausse des émissions atmosphériques en aval.

Toujours dans le cas du procédé Claus modifié classique, les gaz sortant de l'étape catalytique sont ensuite incinérés en SO₂ qui est alors rejeté dans l'atmosphère.

Pour réduire les émissions atmosphériques nocives, bien des procédés avals, nommés traitements de gaz de queue, ont été développés ces quarante dernières années. Les plus nombreux requièrent, en sortie de l'étape catalytique Claus, une réduction de tous les gaz soufrés en H₂S avant, soit de commettre une oxydation directe de l'H₂S en soufre (4) (en dessous ou au-dessus de la température de rosée du soufre), soit de recycler l'H₂S formé vers le four placé en amont. Les taux de récupération du soufre s'en trouvent alors notablement améliorés et les émissions de composés soufrés dans l'atmosphère, réduites.

H₂S + ½ O₂ → H₂O + 1/x Sₓ (4)

L'hydrogénation des composés soufrés est habituellement assurée sur un catalyseur hétérogène qui fonctionne, dans la plupart des cas, à une température comprise entre 200°C (pour les meilleurs catalyseurs) et 300°C (pour les catalyseurs moins actifs). Plus précisément, le catalyseur permet des réactions d'hydrogénation et/ou d'hydrolyse de l'ensemble des composés soufrés présents (dont les traces de soufre vapeur) en H₂S. La désactivation du catalyseur est, en pratique, compensée par une hausse de la température du réacteur. Cependant, cette hausse de température accélère le vieillissement du catalyseur.

Les catalyseurs utilisés sont usuellement des catalyseurs CoMo supportés.

Les gaz sortant du procédé Claus sont chauffés à la température de la réaction dans un brûleur en ligne.

Les gaz réducteurs (H₂, CO) nécessaires aux réactions sont naturellement présents dans le flux.

Le déclin de l'activité du catalyseur d'hydrogénation signifie une perte d'efficacité dans l'utilisation de gaz réducteurs, une baisse de la conversion du CO et une formation croissante de COS.

Le COS peut venir du procédé Claus, mais peut aussi être formé en entrée du réacteur par réaction entre CO et H₂S via la réaction (5)

H₂S + CO → H₂ + COS (5)

Ainsi, la concentration en COS peut augmenter dès l'entrée du réacteur d'hydrogénation jusqu'au niveau correspondant à ce que peut donner cette shift conversion de l'H2S voire d'autres réactions parasites.

Les réactions ainsi engagées peuvent être des réactions purement d'hydrogénation :

SO₂ + 3H₂ → 2 H₂O + H₂S

Sₓ + H₂ → H2S

CS₂ + 2H₂ → CH₄ + H₂S

COS + 3 H₂ → CH₃SH + H₂O

CH₃SH + H₂ → CH₄ + H₂S

des réactions d'hydrolyse :

COS + H₂O → CO₂ + H₂S

CS₂ + 2 H₂O → CO₂ + 2 H₂S

des réactions de conversion du monoxyde de carbone avec de l'eau ou de l'H₂S :

H₂O + CO → H₂ + CO₂

H₂S + CO → H₂ + COS

Ces réactions de shift conversion sont les clefs de fonctionnement d'un catalyseur d'hydrogénation. Une baisse d'activité se traduit par une moindre transformation du CO en H₂, donc par une augmentation de la concentration en CO et une progression de la teneur en COS (du fait d'une conversion accrue du CO avec l'H₂S). Ainsi, une perte d'activité engendre une augmentation de la teneur en COS.

### ART ANTÉRIEUR

La demande de brevet WO 98/07502 présente un enchaînement de catalyseurs. Le catalyseur d'hydrogénation est supporté sur de la silice-alumine et dopée par des métaux des groupes VI et/ou VIII. Le catalyseur d'hydrolyse comprend de l'alumine ou de l'oxyde de titane dopé optionnellement par de l'oxyde de cérium, zirconium, des oxyde ou hydroxyde de métaux alcalins, des oxydes ou hydroxyde de terres rares.

Le document EP-A-1442781 décrit un procédé similaire de traitement d'un gaz comprenant du SO₂ ainsi que du H₂S dans lequel celui-ci est mis en contact avec un premier catalyseur d'hydrogénation, qui est préférentiellement un catalyseur à base de cobalt et de molybdène, sur un support à base d'alumine. L'effluent obtenu est alors mis en contact avec un second catalyseur d'hydrolyse qui est préférentiellement un oxyde de titane comprenant une quantité donnée d'un alcalino-terreux, notamment du calcium

### RESUME DE L'INVENTION

L'invention concerne un procédé de conversion en H₂S des composés soufrés présent dans un gaz comprenant de l'H2S et des composés soufrés. Ce procédé comprend une étape A de mise en contact dudit gaz avec un gaz réducteur en présence d'un catalyseur d'hydrogénation comprenant au moins du cobalt du molybdène et un support alumine, la somme des teneurs en cobalt et molybdène calculés sous forme oxyde étant comprise entre 3 et 25% poids, la surface de ladite alumine étant supérieure à 140 m2/g. Il comprend ensuite une étape B de mise en contact d'au moins une fraction du gaz effluent de l'étape A avec un catalyseur comprenant au moins un composé sélectionné dans le groupe constitué par l'oxyde de titane et l'oxyde de zirconium et au moins un alcalino-terreux, lesdits oxydes de titane et/ou de zirconium correspondant à plus de 5% poids du catalyseur, ledit catalyseur de l'étape B) étant soit sous forme d'oxyde massique ne comprenant que lesdits oxydes soit sous forme d'oxyde supporté, la teneur massique totale en alcalino-terreux étant comprise entre 0,5 et 60% poids.

### DESCRIPTION DÉTAILLÉE DE L'INVENTION

Dans la suite du texte, les groupes d'éléments chimiques sont données selon la classification CAS décrite dans CRC Handbook of Chemistry and Physics, éditeur CRC press, rédacteur en chef D.R. Lide , 81ème édition, 2000-2001.

L'invention concerne un procédé de conversion en H₂S des composés soufrés présents dans un gaz comprenant de l'H2S et des composés soufrés ledit procédé comprenant les étapes suivantes:
a) une étape A de mise en contact dudit gaz avec un gaz réducteur, de préférence H₂ et/ou CO, en présence d'un catalyseur d'hydrogénation comprenant au moins du cobalt du molybdène et un support alumine, la somme des teneurs en cobalt et molybdène calculés sous forme oxyde étant comprise entre 3 et 25% poids, de préférence entre 6 et 20% poids, la surface de ladite alumine étant supérieure à 140 m2/g, de préférence à 180 m2/g, de manière très préférée comprise entre 190 et 340 m2/g.
b) une étape B de mise en contact d'au moins une fraction du gaz effluent de l'étape A avec un catalyseur comprenant au moins un composé sélectionné dans le groupe constitué par l'oxyde de titane et l'oxyde de zirconium et au moins un alcalino-terreux, de préférence le calcium, lesdits oxydes de titane et/ou de zirconium correspondant à plus de 5% poids du catalyseur, ledit catalyseur de l'étape B) étant soit sous forme d'oxyde massique ne comprenant que lesdits oxydes soit sous forme d'oxyde supporté, la teneur massique totale en alcalino-terreux étant comprise entre 0,5 et 60% poids, de préférence comprise entre 1 et 50% poids, avantageusement entre 2 et 35% poids.

Le gaz comprenant de l'H2S et des composés soufrés envoyé à l'étape A) a généralement un taux d'H2S inférieur à 3% molaire, un taux de S02 inférieur à 2% molaire et une somme des taux de tous les autres composés soufrés inférieur à 1% molaire. De préférence, ces taux sont respectivement inférieurs à 2%, 1,5% et 1 % molaire. De manière très préférée, ces taux sont respectivement inférieurs à 1,5%, 1 % et 0,7% molaire.

La fraction du gaz effluent de l'étape A) envoyé à l'étape B) a généralement un rapport molaire H₂S/SO₂ inférieure à 5.

Les oxydes de titane et/ou de zirconium peuvent éventuellement être supportés sur de l'alumine.

Le catalyseur de l'étape B) peut comprendre au moins de l'oxyde de titane et au moins un alcalino-terreux.

En outre, il peut comprendre au moins un dopant sélectionné dans le groupe constitué par les éléments du groupe VIIIB et VIB, la teneur massique totale en dopants étant comprise entre 0,5 et 50%, de préférence entre 1 et 30%, de manière très préférée entre 1 et 15%. Le dopant est généralement sélectionné dans le groupe constitué par le fer, le cobalt et le molybdène, de préférence dans le groupe constitué le cobalt et le molybdène.

La présente invention concerne un enchaînement de catalyseur conduisant à des rendements améliorés à iso-conditions expérimentales en transformation d'H₂S.

L'idée, dans cette partie dédiée à l'hydrogénation, est de parvenir à mieux convertir en particulier le COS, mais aussi le CS₂, sans avoir à augmenter la température de la réaction qui entraîne une plus grande consommation d'énergie.

L'invention consiste ainsi à utiliser un enchaînement d'au moins deux catalyseurs, placés dans le même réacteur catalytique ou dans plusieurs réacteurs catalytiques disposés en série permettant successivement :
a) lors de l'étape A de pousser les réactions d'hydrogénation de composés soufrés ;
b) lors de l'étape B d'améliorer les conversions de certains composés difficiles, en particulier le COS et le CS₂.

Le catalyseur de l'étape B peut se présenter sous toute forme connue, par exemple sous forme de poudre, bille, extrudé, monolithe ou concassé, de préférence sous forme d'extrudé cylindrique ou polylobé ou sous forme de billes.

Selon une variante ou l'oxyde de titane est présent sur le catalyseur de l'étape B), un sulfate de calcium, de baryum, de strontium ou de magnésium, de préférence un sulfate de calcium est ajouté au catalyseur de l'étape B).

Dans le cas d'une mise en forme du catalyseur de l'étape B) par malaxage suivi d'une extrusion, la section transversale de l'extrudé est généralement comprise entre 0,5 et 8 mm, de préférence entre 0,8 et 5 mm.

Pour la préparation du catalyseur de l'étape B), les éléments et les dopants éventuels sont déposés par toute méthode connue de l'homme de métier. Par exemple, une imprégnation du support déjà préparé avec les éléments à ajouter ou des précurseurs de ces éléments peut être effectuée. Un mélange des éléments ou des précurseurs de ces éléments avec le support au cours ou en aval de la mise en forme de ce dernier peut aussi être réalisé. Le dépôt des dopants dans le support peut être également réalisé par coprécipitation.

Dans le cas d'un dépôt par imprégnation, celui-ci est réalisé de manière connue par mise en contact du support avec une ou plusieurs solutions, un ou plusieurs sols et/ou un ou plusieurs gels comprenant au moins un élément sous forme d'oxyde ou de sel ou d'un de leurs précurseurs. L'opération est en général conduite par trempage du support dans un volume déterminé de solution d'au moins un précurseur d'au moins un dopant.

Selon un mode préféré, l'apport des éléments dopants est réalisé par dépôt par imprégnation à sec.

Selon un mode alternatif, une imprégnation par excès est réalisée. L'excès de solution est ensuite évacué par égouttage.

Les étapes A et B sont généralement réalisées à une température comprise entre 50 et 350°C, de préférence entre 100 et 330°C, de préférence entre 130 et 310°C encore préférentiellement incluse entre 170 et 300°C.

La VVH est généralement incluse entre 300 et 5000 h-1, de préférence entre 500 et 4000 h-1, encore préférentiellement entre 1000 et 3500 h-1. Quand à la pression, elle est généralement inférieure à 0,5 MPa, de préférence à 0,2 MPa.

### EXEMPLES

### catalyseur A: CoMo

Le catalyseur **A** correspond au catalyseur TG 107 commercialisé par la société Axens. C'est un catalyseur neuf à base de cobalt et de molybdène sur alumine.
Sa surface spécifique est de 223 m²/g et son volume poreux totale est de 46,2 ml/100g.

### catalyseur B: CoMo

Le catalyseur **B** correspond au catalyseur TG 107 vieilli en l'utilisant industriellement dans un réacteur pendant une année. Sa surface spécifique est de 147 m²/g et son volume poreux total est de 42,1 ml/100g.

Il est contaminé par 0,7% de carbone et 9% de soufre.

### catalyseur C: TiO2Ca

A une suspension d'oxyde de titane obtenue par hydrolyse et filtration dans le procédé classique d'attaque sulfurique de l'ilménite, une suspension de chaux est ajoutée afin de neutraliser l'ensemble des sulfates présents.

Ceci fait, la suspension est séchée à 150°C durant une heure. La poudre est alors malaxée en présence d'eau et d'acide nitrique. La pâte générée est extrudée au travers d'une filière pour obtenir des extrudés ayant une forme cylindrique.

Après séchage à 120°C et calcination à 450°C, les extrudés présentent un diamètre de 3,5 mm, une surface spécifique de 116 m²/g pour un volume poreux total de 36 ml/100g.

Le taux de TiO₂ est de 88% pour une teneur en CaSO₄ de 11 %, la perte au feu complétant le bilan à 100%.

### catalyseur D: TiO2CaFe

Le catalyseur **D** résulte d'une imprégnation à sec d'une solution acide aqueuse de sulfate de fer sur **C,** suivie d'un séchage à 120°C et d'une calcination à 350°C.
Le taux massique de fer (exprimé en Fe₂O₃) de 2,5%.

### catalyseur E: TiO2CaCoMo

Le catalyseur **E** résulte d'une imprégnation à sec d'une solution de nitrate de cobalt et d'heptamolybdate d'ammonium sur **C,** suivie d'un séchage à 120°C et d'une calcination à 450°C.
Les taux massiques de cobalt et de molybdène (exprimés en CoO et MoO₃) sont respectivement de 3,1 et 13,9%.

### catalyseur F: TiO2 imprégnation

Le catalyseur **F** est obtenu par imprégnation à sec de l'alumine Claus CR-3S commercialisée d'Axens avec de l'oxychlorure de titane, de telle manière à donner, après calcination à 500°C, une teneur de 5% en TiO₂ et une surface spécifique de 267 m²/g.

### catalyseur G: TiO2 cogranulation

Le catalyseur **G** est obtenu par cogranulation de flash d'alumine et de gel de titane, pour conduire, après calcination à 450°C, à des billes de granulométrie comprise entre 3,15 et 6,3 mm affichant une teneur de 27% en TiO₂ et une surface spécifique de 281 m²/g.

### catalyseur H: ZrO2 imprégnation

Le catalyseur **H** est préparé par imprégnation à sec de l'alumine Claus CR-3S commercialisée d'Axens avec de l'acétate de zirconium pour donner, après calcination à 500°C, une teneur de 3% en ZrO₂ et une surface spécifique de 287 m²/g.

### catalyseur I: TiO2K

**I** correspond à un catalyseur TiO2 pur modifié par l'apport de potassium via une imprégnation à sec de telle manière à ce que sa teneur finale soit de 1,7% de K20.

### catalyseur J: NiMo

Des extrudés de 1,6 mm de diamètre d'une silice-alumine amorphe comprenant 50% d'alumine sont imprégnés à sec par une solution de nitrate de nickel et d'heptamolybdate d'ammonium. Suivent un séchage à 120°C et une calcination à 450°C. Les taux massiques de nickel et de molybdène (exprimés en NiO et MoO3) sont respectivement de 4,0 et 15%, pour une surface spécifique de 238 m²/g et un volume poreux total de 62 ml/100g.

### catalyseur K: CoMo

Des extrudés de 1,6 mm de diamètre d'une silice-alumine amorphe comprenant 50% d'alumine sont imprégnés à sec par une solution de nitrate de cobalt et d'heptamolybdate d'ammonium. Suivent un séchage à 120°C et une calcination à 450°C. Les taux massiques de cobalt et de molybdène (exprimés en CoO et MoO3) sont respectivement de 3,0 et 14,1%, pour une surface spécifique de 251 m²/g et un volume poreux total de 68 ml/100g.

### Résultats catalytiques

Les tests catalytiques comparatifs ont été conduits dans les conditions suivantes : les catalyseurs A, B, J ou K sont exposés à un flux gazeux contenant en volume 18% CO₂, 0,6% H₂S, 500 ppm COS, 0,3% SO₂, 1,2% CO, 1,5% H₂, 200 ppm CS₂, 22% H₂O, 800 ppm S₈ et, optionnellement, 520 ppm de CH₃SH, sous une VVH de 2000 h⁻¹ et à une température de 220 ou 240°C.

Dans le même réacteur est placé en aval du catalyseur A, B, J ou K un des catalyseurs C à I, de telle manière à ce que le volume de ce deuxième catalyseur corresponde à un tiers de volume du catalyseur A, B, J ou K.

Les performances catalytiques, observées à l'équilibre, sont précisées dans les Tableaux I est II.

**Tableau I Conversions observées à l'équilibre, en absence de méthylmercaptan**

| Catalyseur(s) | Température (°C) | Conversion en % | | |
|---|---|---|---|---|
| | | SO₂ | COS | CS₂ |
| A | 220 | 83 | 70 | 40 |
| A | 240 | 100 | 74 | 83 |
| B | 220 | 67 | -470 | 10 |
| B | 240 | 92 | -410 | 33 |
| B puis C | 220 | 85 | -100 | 40 |
| B puis C | 240 | 95 | -35 | 55 |
| B puis D | 240 | 95 | 5 | 40 |
| B puis E | 220 | 98 | 41 | 71 |
| B puis I | 220 | 67 | -450 | 17 |
| A puis C | 220 | 85 | 86 | 67 |
| A puis E | 240 | 100 | 91 | 88 |
| A puis F | 240 | 89 | 75 | 51 |
| A puis G | 240 | 87 | 76 | 49 |
| A puis H | 240 | 91 | 79 | 56 |
| A puis I | 220 | 83 | 61 | 45 |
| J puis C | 220 | 77 | -110 | 37 |
| K puis C | 220 | 79 | -24 | 49 |

Une conversion négative signifie que le produit concerné se trouve plus abondant en sortie qu'en entrée de réacteur.
Les tests catalytiques mettent en évidence que l'enchaînement J puis C conduit à de moins bonnes conversions que l'enchaînement K puis C.
De plus, l'enchaînement K puis C conduit à de moins bonnes conversions que l'enchaînement A puis C.

**Tableau II. Conversions observées à l'équilibre, en présence de méthylmercaptan**

| Catalyseur(s) | Température (°C) | Conversion (%) de | | | |
|---|---|---|---|---|---|
| | | SO₂ | COS | CS₂ | CH₃SH |
| B | 240 | 97 | -295 | -45 | 87 |
| B puis C | 220 | 91 | -45 | -41 | 92 |
| B puis C | 240 | 97 | 10 | 5 | 95 |
| B puis E | 240 | 100 | 62 | 72 | 100 |

Une conversion négative signifie que le produit concerné se trouve plus abondant en sortie qu'en entrée de réacteur.

Ces tests catalytiques mettent en évidence que l'enchaînement B puis E conduit à des meilleures conversions que l'enchaînement B puis C. L'effet du dopant CoMo sur le catalyseur de l'étape B est ainsi mis en évidence.

## Revendications

1. Procédé de conversion en H₂S des composés soufrés présents dans un gaz comprenant de l'H2S et des composés soufrés, ledit procédé comprenant les étapes suivantes:
a) une étape A de mise en contact dudit gaz avec un gaz réducteur en présence d'un catalyseur d'hydrogénation comprenant au moins du cobalt du molybdène et un support alumine, la somme des teneurs en cobalt et molybdène calculée sous forme oxyde étant comprise entre 3 et 25% poids, la surface de ladite alumine étant supérieure à 140 m²/g
b) une étape B de mise en contact d'au moins une fraction du gaz effluent de l'étape A avec un catalyseur comprenant au moins un alcalino-terreux et au moins un composé sélectionné dans le groupe constitué par l'oxyde de titane et l'oxyde de zirconium, lesdits oxydes de titane et/ou de zirconium correspondant à plus de 5% poids du catalyseur la teneur massique totale en alcalino-terreux étant comprise entre 0,5 et 60% poids, ledit catalyseur de l'étape B) étant soit sous forme d'oxyde massique ne comprenant que lesdits oxydes soit sous forme d'oxyde supporté,
procédé **caractérisé en ce que** le catalyseur de l'étape B comprend en outre au moins un dopant sélectionné dans le groupe constitué par le fer, le cobalt et le molybdène, la teneur massique totale en dopants étant comprise entre 0,5 et 50%.

2. Procédé de conversion selon la revendication 1 dans lequel la somme des teneurs en cobalt et molybdène calculée sous forme oxyde dans le catalyseur de l'étape A) est comprise entre 6 et 20% poids.

3. Procédé de conversion selon l'une des revendications 1 ou 2 dans lequel la surface de l'alumine support du catalyseur de l'étape A) est supérieure à 180 m2/g.

4. Procédé de conversion selon l'une des revendications 1 à 3 dans lequel le catalyseur de l'étape B) comprend au moins de l'oxyde de titane.

5. Procédé de conversion selon l'une des revendications 1 à 4 dans lequel le catalyseur de l'étape B) comprend un seul alcalino-terreux.

6. Procédé de conversion selon la revendication 5 dans lequel l'alcalino-terreux est le calcium.

7. Procédé de conversion selon l'une des revendications 1 à 6 dans lequel le ou les dopants sont sélectionnés dans le groupe constitué par le cobalt et le molybdène.

8. Procédé de conversion selon l'une des revendications 1 à 7 dans lequel la teneur massique totale en dopants est comprise entre 1 et 30%.

9. Procédé de conversion selon l'une des revendications 1 à 8 dans lequel lesdits oxydes de titane et/ou de zirconium sont supportés sur de l'alumine.

10. Procédé de conversion selon l'une des revendications 1 à 9 dans lequel le gaz comprenant de l'H2S et des composés soufrés envoyé à l'étape A) a un taux d'H2S inférieur à 3% molaire, un taux de SO₂ inférieur à 2% molaire et une somme des taux de tous les autres composés soufrés inférieur à 1% molaire.

## Claims

1. A process for the conversion of sulphur-containing compounds present in a gas comprising H₂S and sulphur-containing compounds into H₂S, said process comprising the following steps:
a) a step A for bringing said gas into contact with a reducing gas in the presence of a hydrogenation catalyst comprising at least cobalt, molybdenum and an alumina support, the sum of the quantities of cobalt and molybdenum, calculated in the oxide form, being in the range 3% to 25% by weight, the surface area of said alumina being more than 140 m²/g;
b) a step B for bringing at least a fraction of the effluent gas from step A into contact with a catalyst comprising at least one alkaline-earth and at least one compound selected from the group constituted by titanium oxide and zirconium oxide, said oxides of titanium and/or zirconium corresponding to more than 5% by weight of the catalyst, the total quantity by weight of alkaline-earths being in the range 0.5% to 60% by weight, said catalyst for step B) being either in the form of a bulk oxide comprising only said oxides or in the form of a supported oxide,
process **characterized in that** the catalyst of step B comprises, further, at least one dopant selected from the group constituted by iron, cobalt and molybdenum, the total quantity by weight of dopants being in the range 0.5% to 50%.

2. A conversion process according to claim 1, in which the sum of the quantities of cobalt and molybdenum, calculated in the oxide form, in the catalyst for step A) is in the range 6% to 20% by weight.

3. A conversion process according to claim 1 or claim 2, in which the surface area of the alumina support of the catalyst for step A) is more than 180 m²/g.

4. A conversion process according to one of claims I to 3, in which the catalyst for step B) comprises at least one titanium oxide.

5. A conversion process according to one of claims 1 to 4, in which the catalyst for step B) comprises a single alkaline-earth.

6. A conversion process according to claim 5, in which the alkaline-earth is calcium.

7. A conversion process according to one of claims I to 6, in which the dopant or dopants are selected from the group constituted by cobalt and molybdenum.

8. A conversion process according to one of claims 1 to 7, in which the total quantity by weight of dopant is in the range 1% to 30%.

9. A conversion process according to one of claims 1 to 8, in which said oxides of titanium and/or zirconium are supported on alumina.

10. A conversion process according to one of claims I to 9, in which the gas comprising H₂S and sulphur-containing compounds sent to step A) has a H₂S content of less than 3% molar, a SO₂ contend of less than 2% molar and a sum of the quantities of all of the other sulphur-containing compounds of less than I % molar.

## Patentansprüche

1. Verfahren zur Umwandlung schwefelhaltiger Verbindungen in H₂S, die in einem Gas vorkommen, welches H₂S und schwefelhaltige Verbindungen umfasst, wobei das Verfahren die folgenden Schritte umfasst:
a) einen Schritt A, wobei das Gas mit einem Reduktionsgas in Kontakt gebracht wird in Gegenwart eines Hydrierungskatalysators, der wenigstens Kobalt, Molybdän und einen Tonerdeträger umfasst, wobei die Summe des Gehalts an Kobalt und Molybdän, als Oxidform berechnet, zwischen 3 und 25 Gew.% beträgt, wobei die Oberfläche der Tonerde größer als 140 m²/g ist
b) einen Schritt B, wobei wenigstens eine Fraktion des Abgases aus Schritt A mit einem Katalysator in Kontakt gebracht wird, der wenigstens ein Erdalkalimetall und wenigstens eine Verbindung ausgewählt aus der Gruppe bestehend aus Titanoxid und Zirkoniumoxid umfasst, wobei die Oxide von Titan und/oder Zirkonium mehr als 5 Gew.% des Katalysators darstellen, wobei der Gesamtmassengehalt an Erdalkalimetall zwischen 0,5 und 60 Gew.% beträgt, wobei der Katalysator aus Schritt B) entweder in Form eines massiven Oxids, das ausschließlich diese Oxide umfasst, oder in Form eines geträgerten Oxids vorliegt,
wobei das Verfahren **dadurch gekennzeichnet ist, dass** der Katalysator des Schritts B) ferner wenigstens ein Dotierungsmittel ausgewählt aus der Gruppe bestehend aus Eisen, Kobalt und Molybdän umfasst, wobei der Gesamtmassengehalt des Dotierungsmittels zwischen 0,5 und 50 % liegt.

2. Umwandlungsverfahren nach Anspruch 1, wobei die Summe der Gehalte an Kobalt und Molybdän, als Oxidform berechnet, im Katalysator des Schritts A) zwischen 6 und 20 Gew.% beträgt.

3. Umwandlungsverfahren nach einem der Ansprüche 1 oder 2, wobei die Oberfläche des Tonerdeträgers des Katalysators aus Schritt A) größer als 180 m²/g ist.

4. Umwandlungsverfahren nach einem der Ansprüche 1 bis 3, wobei der Katalysator aus Schritt B) wenigstens Titanoxid umfasst.

5. Umwandlungsverfahren nach einem der Ansprüche 1 bis 4, wobei der Katalysator aus Schritt B) nur ein Erdalkalimetall umfasst.

6. Umwandlungsverfahren nach Anspruch 5, wobei das Erdalkalimetall Calcium ist.

7. Umwandlungsverfahren nach einem der Ansprüche 1 bis 6, wobei das oder die Dotierungsmittel ausgewählt ist/sind aus der Gruppe bestehend aus Kobalt und Molybdän.

8. Umwandlungsverfahren nach einem der Ansprüche 1 bis 7, wobei der Gesamtmassengehalt der Dotierungsmittel zwischen 1 und 30 % beträgt.

9. Umwandlungsverfahren nach einem der Ansprüche 1 bis 8, wobei die Oxide von Titan und/oder Zirkonium auf Tonerde geträgert sind.

10. Umwandlungsverfahren nach einem der Ansprüche 1 bis 9, wobei das H₂S und schwefelhaltige Verbindungen umfassende Gas, das in Schritt A) eingeleitet wird, einen H₂S Gehalt von weniger als 3 Mol-%, einen SO₂ Gehalt von weniger als 2 Mol-% und eine Summe der Gehalte aller anderen schwefligen Verbindungen von weniger als 1 Mol-% aufweist.
